Europäisches Patentamt

European Patent Office

Office européen des brevets

(11) Publication number: **0 037 358**
**B1**

## EUROPEAN PATENT SPECIFICATION

(45) Date of publication of patent specification: **04.12.85**

(51) Int. Cl.⁴: **F 16 L 11/08**

(21) Application number: **81630025.5**

(22) Date of filing: **18.03.81**

(54) Hose structure.

(30) Priority: **31.03.80 US 135413**

(43) Date of publication of application:
**07.10.81 Bulletin 81/40**

(45) Publication of the grant of the patent:
**04.12.85 Bulletin 85/49**

(84) Designated Contracting States:
**DE FR GB SE**

(56) References cited:
**DE-A-1 420 131**
**DE-A-2 645 157**
**DE-B-1 214 875**
**GB-A-1 351 602**
**US-A-3 989 067**

(73) Proprietor: **THE GOODYEAR TIRE & RUBBER COMPANY**
**1144 East Market Street**
**Akron, Ohio 44316 (US)**

(72) Inventor: **Allen, Terry Frank**
**1295 Swigart Road**
**Barberton, Ohio 44203 (US)**
Inventor: **Kluss, Karl Konrad**
**6230 Monticello Drive**
**Concord, North Carolina 28025 (US)**
Inventor: **Demarse, Ernest William**
**546 Woodland Drive**
**Tallmadge, Ohio 44278 (US)**
Inventor: **Sawyer, John Marshall**
**791 Eaton Avenue**
**Cuyahoga Falls, Ohio 44221 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

**Description**

The invention pertains to a hose structure and particularly to a hose structure suitable for use in highly abrasive service involving combinations of impact-type and sliding-type abrasion.

Hoses are commonly used to transport or convey particulate matter in a fluid media. Examples of such service include in sand suction and dredge service, the transport of slurry compositions such as those containing mining ores or waste, and the transport of particulate-containing fuels such as coal/fuel oil mixtures or coal/water slurries. In some mining applications the particulate matter is transported by a low viscosity fluid such as water or air and contains sharp edged rock particles ranging from a size comparable to a grain of sand up to or greater than three inches (7.6 cm) of maximum dimension. The velocities with which the particulate matter is swept along the bore of the hose by the fluid medium can be quite substantial. For example, an eight inch (20.3 cm) bore diameter reinforced elastomeric hose has been used for the transport of rock particles up to three inches (7.6 cm) in diameter, the rock particles being propelled through the bore of the hose by air moving at about 120 to 160 feet per second (36.6 to 48.8 meters/sec). At such high velocities it is desirable that the tube of the hose be resistant to cutting and gouging to prolong the life of the hose.

Additionally, where such large particles are forced to deviate from a straight path they impact against the tube of the hose structure. The hose of GB—A—1 351 602 utilizes a complex inner lining structure of a hose having two different layers of elastomer with the innermost layer containing an embedded layer of breaker fabric with additional layers of fabric radially outward of each elastomer layer of the liner. This complex structure yields a very inflexible heavy hose subject to poor adhesion between fabric layers and elastomer layers of the liner. Hoses used for the transport of abrasive particulate-containing media are generally of large diameter, that is, greater than one inch (2.5 cm) internal diameter and often are considerably of much greater diameter up to and including, for example, two feet (60 cm) in diameter.

According to the present invention there is provided a reinforced hose structure as defined in the appended Claim 1.

The invention is further described and illustrated in the accompanying drawing in which

Figure 1 is a cross-sectional view of a hose structure according to the prior art, and

Figure 2 is a cross-sectional view of an embodiment of a hose structure according to the invention.

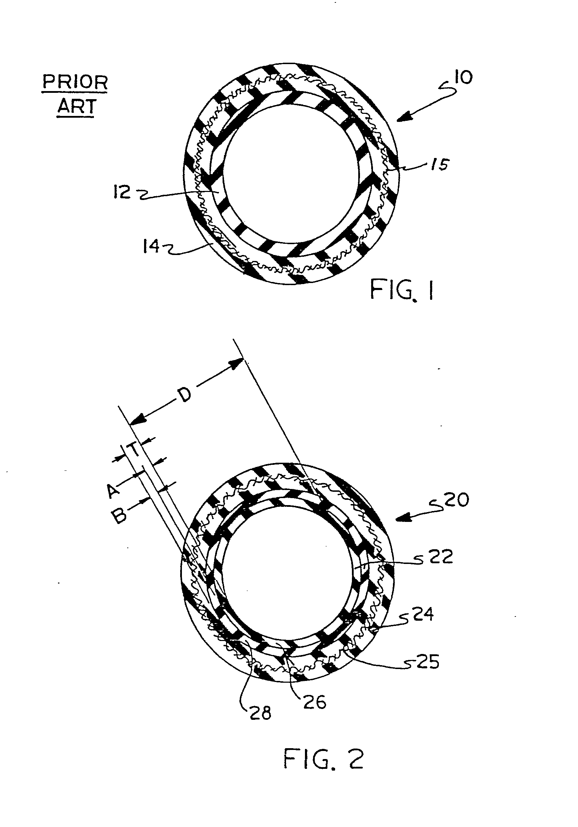

An example of a known hose structure intended for conveyance of abrasive materials is illustrated in Figure 1. Known hose structure 10 includes a single inner tube 12 of elastomeric material surrounded by a body 14 including reinforcements 15 therein to withstand radial and longitudinal loads imposed on the hose. The tube layer 12 is formed from an elastomeric compound selected according to the anticipated service of the hose. The compound may be designed to provide optimum resistance to sliding type abrasion or to impact-type abrasion but not to both types as with known compounding technology, generally speaking, increasing resistance to sliding-type abrasion results generally in a reduction of resistance to impact-type abrasion and vice versa.

Referring to Figure 2, there is shown an embodiment of a hose structure 20 according to the invention. In hose structure 20 there are provided at least two coaxial tube layers 26 and 28. Radially outwardly of tube layers 26 and 28 there is provided a hose body 24 including, elastomer embedded reinforcements 25.

The structure of the hose body 24 and the nature of the reinforcements 25 therein are not significant to the invention. Suitable structures for these aspects of an abrasive service hose are considered well known to those skilled in the art and will not be discussed further herein.

The radially innermost tube layer 26 is in direct contact with the material being conveyed through the hose. The radially innermost tube layer 26 is formed of an elastomeric material designed to resist cutting, tearing and sliding types of abrasion whereas the radially outer tube layer 28 is formed of an elastomeric material designed primarily for impact resistance and is of greater resilience than that of the radially innermost tube layer 26.

In Table I are listed what are believed to be desirable properties for the radially innermost tube layer and a radially outer tube layer for a hose carrying abrasive media. Also included is comparative data for a pure natural rubber compound having only a cure system added to enable vulcanization. The pure gum compound used for comparison here contains no fillers such as silica or carbon black which are commonly used to modify the properties of the base polymer of an elastomeric compound.

TABLE I

| | Vulcanized natural rubber | Compound for radially outer tube | Compound for radially innermost tube |
|---|---|---|---|
| ASTM D412 Tensile strength (psi) | 2300 | Range 3200/4500 | Range 2800/4000 |
| Elongation at rupture (%) | 790 | 350/650 | 300/600 |
| 300% Modulus (psi) | 145 | 1000/1500 | 1200/1850 |
| Hardness (Shore A) | 33 | 40/65 | 60/80 |
| ASTM D3389 Rotary abrasion (wgt loss in grams) H18 wheel, 1 kg wgt 5000 revolutions | 3.6 | 1.3/2.5 | 0.8/2.0 |
| ASTM B1054 Rebound (%) | 88 | 50/90 | 25/75 |
| ASTM D624 Die C Tear (psi) | 181 | 400/600 | 500/850 |

A hose having an eight inch bore diameter was prepared for use in abrasive media transport wherein the material to be pneumatically conveyed included rock particles up to three inches (7.6 cm) in diameter having sharp edges. The physical properties of the compounds chosen for this hose are given in Table 2 and for comparison there are provided the values obtained on the same tests for pure natural rubber having only a vulcanizing system added thereto.

TABLE II

| | Vulcanized natural rubber | Compound of radially outer tube | Compound of radially innermost tube |
|---|---|---|---|
| ASTM D412 Tensile strength (psi) | 2300 | 4000 | 3400 |
| Elongation at rupture (%) | 790 | 550 | 530 |
| 300% Modulus (psi) | 145 | 1320 | 680 |
| Hardness (shore A) | 33 | 57 | 71 |
| ASTM D3389 Rotary abrasion (wgt. loss in grams) H18 wheel, 1 kg wgt. 5000 revolutions | 3.6 | 2.1 | 1.3 |
| ASTM B1054 Rebound (%) | 88 | 71 | 50 |
| ASTM D624 Die C Tear (psi) | 181 | 482 | 750 |

It is seen from Table II that in the hose according to the invention the resilience of the radially innermost tube layer material is less than that of the radially outermost tube material as measured according to ASTM B1054 wherein a greater percentage rebound indicates higher resilience. The abrasion resistance of the radially innermost tube material as measured according to ASTM D3389 is greater than that of the radially outer tube material as evidenced by a lower weight loss of the radially innermost tube material. As also shown in Table II, the radially innermost tube material when measured according to ASTM D624 using die C has a greater resistance to tearing than the radially outer tube material. The tensile strength of the radially innermost tube material is lower than that of the outer tube material and of comparable order of elongation at rupture. The radially innermost tube material is of greater hardness (71 Shore A) than the radially outer tube material (57 Shore A). The modulus of the radially innermost tube material at 300% elongation is less than that of the radially outer tube material (680 psi versus 1320 psi).

Again referring to Figure 2 it is seen that the hose structure 20 has a plurality of tube layers 22. Although two tube layers 26 and 28 are illustrated, this is not taken to be limiting as a hose according to the invention may contain more than two concentric tube layers of elastomeric material, each of which may be of a differing elastomeric compound having different physical properties. What is required is that there be at least two concentric tube layers of elastomeric material with the innermost tube layer being of a material having a greater resistance to sliding abrasion than a tube layer radially outwardly thereof, and a radially outer tube layer of a material having a greater resilience than the radially innermost tube layer and a greater resistance to impact abrasion.

The tube layers 22 of the hose structure 20 have an overall thickness T. In hose structure 20 the radially innermost tube layer 26 has a thickness A. The radially outermost tube layer 28 has a thickness B. The radially innermost tube layer 26 may be from about 25% to about 75% of the overall combined thickness T of the tube layers 22 and in a preferred embodiment is about 2/3 of the overall thickness T of the combined tube layers. The overall thickness of the combined tube layers is preferably at least 3% of the bore diameter D of the hose and not more than 10% of the bore diameter D of the hose.

When selecting the compounds to be used for the concentric tube layers it is desired to keep the tear strength as high as possible and the rebound as high as possible. However, compounding to increase resistance to tearing usually results in lower rebound value with known compounding techniques and materials. The use of at least two concentric tube layers permits the hose designer to select compounds for the tube layers with differing properties so as to simultaneously satisfy in the hose tube requirements for high abrasion resistance, high tear resistance and high rebound. The radially innermost tube layer is cushioned by being surrounded by a conentric tube layer having greater resilience. The thickness of the tube layers 22 typically may range from 0.25 inches (0.6 cm) to two inches (5 cm) depending upon the size of the hose, flexibility requirements and life requirements of the hose.

In a preferred embodiment, the radially innermost tube layer 26 and an outer tube layer 28 are of different colors. As the radially innermost tube layer is worn away the outer tube layer becomes visible. The use of differing colors for the concentric tube layers thereby functions as a wear indicator. While a replacement is being obtained a radially outer tube layer continues to permit the hose to provide additional service after the radially innermost tube layer is worn away. Thus the need for replacement may be anticipated and downtime may be reduced by use of such hose.

**Claims**

1. A reinforced abrasion resistant hose structure (20) for conveying abrasive particulate matter in fluid media comprising a first radially innermost tube layer (26) of an abrasion resistant elastomeric material, a second radially outward tube layer (28) of an elastomeric material which is more resilient than the first layer and a hose body (24) including reinforcements (25) surrounding the first and second tube layers, characterized in that the second radially outward tube layer (28) is disposed directly adjacent to the first radially innermost tube layer (26) and wherein the first radially innermost tube layer (26) is resistant to sliding abrasion and has a greater said resistance to sliding abrasion than the second radially outward tube layer (28) and wherein the second radially outward layer (28) is resistant to impact abrasion and has a greater said resistance to impact abrasion than the first radially innermost tube layer (26).

2. The reinforced resistance hose structure (20) of Claim 1 characterized in that the first radially innermost tube layer (26) has a greater resistance to abrasion when measured according to ASTM D3389 using an H18 wheel, 1 kilogram weight, 5000 revolutions, than that of the second radially outward tube layer (28), and that the second radially outward tube layer (28) has a greater resilience and a greater resistance to impact abrasion than that of the first radially innermost tube layer (26) when measured according to ASTM B1054.

3. The hose structure (20) of Claim 2 characterized in that the first, radially innermost tube layer (26) is of a material having an abrasion rating from about 0.8 to 2.0 grams loss when measured according to ASTM D3389 using an H18 wheel, 1 kilogram weight, 5000 revolutions, a rebound of about 25 to 75%, and the second, radially outward tube layer (28) is of a material having an abrasion rating of about 1.3 to 2.5 grams lost when measured according to ASTM D3389 using an H18 wheel, 1 kilogram weight, 5000 revolutions, and a rebound of from about 50 to 90%.

4. The hose structure (20) of Claim 2 or 3 characterized in that the first, radially innermost tube layer (26) is of a material, when measured according to ASTM D412, having a tensile strength of about 2800 to 4000 psi, an elongation at rupture of about 300 to 600% of original length, a modulus at 300% elongation of about 1200 to 1850 psi and a Shore A Hardness of about 60 to 80, and the second, radially outward tube

**0 037 358**

layer (28), when measured according to ASTM D412, has a tensile strength of about 3200 to 4500 psi, an elongation at rupture of about 350 to 650%, a modulus at 300% elongation of about 1000 to 1500 psi, and a Shore A Hardness of about 40 to 65.

5. The hose structure (20) of Claim 2, 3 or 4 characterized in that the first, radially innermost tube layer (26) is of a material having a resistance to tear, when measured according to ASTM D624 using Die C, from about 500 to 850 psi, and the second, radially outward tube layer (28) is of a material having a resistance to tear as measured according to ASTM D624 using Die C from about 400 to 600 psi.

6. The hose structure (20) of Claim 5 characterized in that the thickness of the first, radially innermost tube layer (26) is from about 25 to about 75% of the overall thickness of the combined tube layers (26, 28).

7. The hose structure (20) of Claim 5 having only two tube layers characterized in that the first, radially innermost tube layer (26) is about 2/3 of the overall thickness of the combined tube layers (26, 28).

8. The hose structure (20) of Claim 5 characterized in that the overall thickness of the combined tube layers (26, 28) is at least 3% but not greater than 10% of the bore diameter of the hose structure (20).

9. The hose structure (20) of Claim 1 characterized in that the first, radially innermost tube layer (26) is of a material having an abrasion rating of about 1.3 grams lost when measured according to ASTM D3389 using an H18 wheel, 1 kilogram weight, 5000 revolutions, a rebound of about 50% when measured according to ASTM B1054, and when measured according to ASTM D412, a tensile strength of about 3400 psi, an elongation at rupture of about 500%, a modulus at 300% elongation of about 680 psi, and a Shore A Hardness of about 71; and wherein the second, radially outward tube layer (28) is of a material having an abrasion rating of about 2.1 grams lost measured according to ASTM D3389 using an H18 wheel, 1 kilogram weight, 5000 revolutions, a rebound of about 70% when measured according to ASTM B1054, and when measured according to ASTM D412, a tensile strength of about 4000 psi, an elongation of about 1320 psi, and a Shore A Hardness of about 57.

10. The hose structure (20) of Claim 9 characterized in that the first, radially innermost tube layer (26) is of a material having a tear strength when measured according to ASTM D624 using Die C of about 750 psi and the second, radially outward tube layer (28) is of a material having a tear strength using Die C of about 480 psi.

**Patentansprüche**

1. Verstärkter verschleißfester Schlauch (20) zur Förderung abschleifender oder scheuernder korpuskularer Stoffe in einem fluiden Medium, mit einer ersten, radial innenliegenden Schlauchlage (26) aus einem verschleißfesten elastomeren Material, mit einer zweiten, radial außenliegenden Schlauchlage (28) aus einem elastomeren Material, welches elastischer ist als die erste Lage, und mit einem Schlauchkörper (24), welcher Verstärkungen (25) aufweist, die die erste und die zweite Schlauchlage umschließen, dadurch gekennzeichnet, daß die zweite, radial außenliegende Schlauchlage (28) direkt angrenzend an die erste, radial innenliegende Schlauchlage (26) angeordnet ist, daß die erste, radial innenliegende Schlauchlage (26) widerstandsfähig ist gegenüber einem abschleifenden Verschleiß und einen größeren Widerstand gegenüber Abriebsverschleiß aufweist als die zweite, radial außenliegende Schlauchlage (28), und daß die zweite, radial außenliegende Lage (28) widerstandsfähig ist gegenüber Verschleiß infolge Schlagbeanspruchung und einen größeren Widerstand gegenüber Verschleiß infolge Schlagbeanspruchung aufweist als die erste, radial innenliegende Schlauchlage (26).

2. Verstärkter widerstandsfähiger Schlauch (20) nach Anspruch 1, dadurch gekennzeichnet, daß die erste, radial innenliegende Schlauchlage (26) einen größeren Widerstand gegenüber Verschleiß aufweist gemessen nach ASTM D3389 unter Verwendung eines H18-Rades von 1 kg Gewicht bei 5000 Umdrehungen als die zweite, radial außenliegende Schlauchlage (28), und daß die zweite, radial außenliegende Schlauchlage (28) eine größere Elastizität und einen größeren Widerstand gegen Verschleiß infolge von Schlagbeanspruchung aufweist als die erste, radial innenliegende Schlauchlage (26) gemessen nach ASTM B1054.

3. Schlauch (20) nach Anspruch 2, dadurch gekennzeichnet, daß die erste, radial innenliegende Schlauchlage (26) aus einem Material besteht mit einem Verschleißwert von etwa 0,8 bis 2,0 g Abriebverlust gemessen nach ASTM D3389 unter Verwendung eines H18-Rades von 1 kg Gewicht und 5000 Umdrehungen, und mit einem Rückprall von etwa 25 bis 75%, und daß die zweite, radial außenliegende Schlauchlage (28) aus einem Material besteht, das einen Verschleißwert von etwa 1,3 bis 2,5 g Abriebverlust gemessen nach ASTM D3389 unter Verwendung eines H18-Rades von 1 kg Gewicht bei 5000 Umdrehungen und einem Rückprall von etwa 50 bis 90% aufweist.

4. Schlauch (20) nach Anspruch 2 oder 3, dadurch gekennzeichnet, daß die erste, radial innenliegende Schlauchlage (26) aus einem Material besteht, das, gemessen nach ASTM D412, eine Zugfestigkeit von etwa 2800 bis 4000 psi, eine Bruchdehnung von etwa 300 bis 600% der Ursprungslänge, ein Modul bei 300% Dehnung von etwa 1200 bis 1850 psi und eine Shore A-Härte von etwa 60 bis 80 aufweist, und daß die zweite, radial außenliegende Schlauchlage (28), gemessen nach ASTM D412, eine Zugfestigkeit von etwa 3200 bis 4500 psi, eine Bruchdehnung von etwa 350 bis 650%, ein Modul bei 300% Dehnung von etwa 1000 bis 1500 psi und eine Shore A-Härte von etwa 40 bis 65 aufweist.

5. Schlauch (20) nach Anspruch 2, 3 oder 4, dadurch gekennzeichnet, daß die erste, radial innenliegende Schlauchlage (26) aus einem Material mit einer Reißfestigkeit gemessen nach ASTM D624

5

**0 037 358**

unter Verwendung eines Die C, von etwa 500 bis 850 psi besteht, und daß die zweite, radial außenliegende Schlauchlage (28) aus einem Material mit einer Reißfestigkeit, gemessen nach ASTM D624 unter Verwendung eines Die C, von etwa 400 bis 600 psi besteht.

6. Schlauch (20) nach Anspruch 5, dadurch gekennzeichnet, daß die Stärke der ersten, radial innenliegenden Schlauchlage (26) etwa 25 bis 75% der Gesamtstärke der zusammengesetzten Schlauchlagen (26, 28) ist.

7. Schlauch (20) nach Anspruch 5, mit nur zwei Schlauchlagen, dadurch gekennzeichnet, daß die erste, radial innenliegende Schlauchlage (26) etwa 2/3 der Gesamtstärke der verbundenen Schlauchlagen (26, 28) aufweist.

8. Schlauch (20) nach Anspruch 5, dadurch gekennzeichnet, daß die Gesamtstärke der verbundenen Schlauchlagen (26, 28) mindestens 3% aber nicht größer als 10% des lichten Durchmessers des Schlauches (20) ist.

9. Schlauch (20) nach Anspruch 1, dadurch gekennzeichnet, daß die erste, radial innenliegende Schlauchlage (26) aus einem Material ist mit einem Verschleißwert von etwa 1,3 g Abriebverlust, gemessen nach ASTM D3389 unter Verwendung eines H18-Rades von 1 kg Gewicht bei 5000 Umdrehungen, und einem Rückprall von etwa 50%, gemessen nach ASTM B1054, und bei einer Messung nach ASTM D412 eine Zugfestigkeit von etwa 3400 psi, eine Bruchdehnung von etwa 500%, ein Modul bei 300% Dehnung von etwa 680 psi und eine Shore A-Härte von etwa 71 aufweist, und daß die zweite, radial außenliegende Schlauchlage (28) aus einem Material ist mit einem Verschleißwert von etwa 2,1 g Abriebverlust, gemessen nach ASTM D3389 unter Verwendung eines H18-Rades von 1 kg Gewicht bei 5000 Umdrehungen, mit einem Rückprall von etwa 70%, gemessen nach ASTM B1054, und, gemessen nach ASTM D412, mit einer Zugfestigkeit von etwa 4000 psi, einer Dehnung von etwa 1320 psi und einer Shore A-Härte von etwa 57.

10. Schlauch (20) nach Anspruch 9, dadurch gekennzeichnet, daß die erste, radial innenliegende Schlauchlage (26) aus einem Material ist mit einer Reißfestigkeit, gemessen nach ASTM D624 unter Verwendung eines Die C, von etwa 750 psi, und daß die zweite, radial außenliegende Schlauchlage (28) aus einem Material ist mit einer Reißfestigkeit, gemessen bei Verwendung eines Die C, von etwa 480 psi.

**Revendications**

1. Structure de tuyau renforcée résistant à l'abrasion (20) pour le transport de matières abrasives en particules dans des milieux fluides, cette structure de tuyau comprenant une première couche tubulaire radiale intérieure extrême (26) en une matière élastomère résistant à l'abrasion, une seconde couche tubulaire extérieure radiale (28) en une matière élastomère d'une élasticité supérieure à celle de la première couche, ainsi qu'un corps de tuyau (24) comprenant des renforcements (25) entourant les première et seconde couches tubulaires, caractérisée en ce que la seconde couche tubulaire extérieure radiale (28) est disposée à proximité immédiate de la première couche tubulaire radiale intérieure extrême (26), cell-ci possédant une résistance à l'abrasion due au glissement qui est supérieure à cell de la seconde couche tubulaire extérieure radiale (28), laquelle possède une résistance à l'abrasion due aux chocs qui est supérieure à celle de la première couche tubulaire radiale intérieure extrême (26).

2. Structure de tuyau renforcée résistant à l'abrasion (20) selon la revendication 1, caractérisée en ce que la première couche tubulaire radiale intérieure extrême (26) a une résistance à l'abrasion (mesurée conformément à la norme ASTM D3389 en utilisant une roue H18, poids: 1 kg, 5000 révolutions) supérieure à celle de la seconde couche tubulaire extérieure radiale (28), laquelle possède une élasticité et une résistance à l'abrasion due aux chocs supérieures à celles de la première couche tubulaire radiale intérieure extrême (26), mesuré conformément à la norme ASTM B1054.

3. Structure de tuyau (20) selon la revendication 2, caractérisée en ce que la première couche tubulaire radiale intérieure extrême (26) est constituée d'une matière présentant une usure par abrasion évaluée par une perte de matière d'environ 0,8 à 2,0 g, mesurée conformément à la norme ASTM D3389 en utilisant une roue H18, poids: 1 kg, 5000 révolutions, ainsi qu'un rebondissement d'environ 25 à 75%, tandis que la seconde couche tubulaire extérieure radiale (28) est constituée d'une matière présentant une usure par abrasion évaluée par une perte de matière d'environ 1,3 à 2,5 g, mesurée conformément à la norme ASTM D3389 en utilisant une roue H18, poids: 1 kg, 5000 révolutions, ainsi qu'un rebondissement d'environ 50 à 90%.

4. Structure de tuyau (20) selon la revendication 2 ou 3, caractérisée en ce que la première couche tubulaire radiale intérieure extrême (26) est constituée d'une matière ayant les propriétés suivantes, mesurées conformément à la norme ASTM D412: une résistance à la traction d'environ 2800 à 4000 livres/pouce carré (196 à 280 kg/cm$^2$), un allongement à la rupture d'environ 300 à 600% de la longueur initiale, un module, à un allongement de 300%, d'environ 1200 à 1850 livres/pouce carré (84 à 129,5 kg/cm$^2$) et une dureté Shore A d'environ 60 à 80, tandis que la seconde couche tubulaire extérieure radiale (28) possède les propriétés suivantes, mesurées conformément à la norme ASTM D412: une résistance à la traction d'environ 3200 à 4500 livres/pouce carré (224 à 315 kg/cm$^2$), un allongement à la rupture d'environ 350 à 650%, un module, à un allongement de 300%, d'environ 1000 à 1500 livres/pouce carré (70 à 105 kg/cm$^2$) et une dureté Shore A d'environ 40 à 65.

5. Structure de tuyau (20) selon la revendication 2, 3 ou 4, caractérisée en ce que la première couche tubulaire radiale intérieure extrême (26) est constituée d'une matière ayant une résistance à la déchirure,

6

mesurée conformément à la norme ASTM D624 en utilisant une matrice en C, d'environ 500 à 850 livres/pouce carré (35 à 59,5 kg/cm$^2$), tandis que la seconde couche tubulaire extérieure radiale (28) est constituée d'une matière ayant une résistance à la déchirure, mesurée conformément à la norme ASTM D624 en utilisant une matrice en C, d'environ 400 à 600 livres/pouce carré (28 à 42 kg/cm$^2$).

6. Structure de tuyau (20) selon la revendication 5, caractérisée en ce que l'épaisseur de la première couche tubulaire radiale intérieure extrême (26) atteint environ 25 à environ 75% de l'épaisseur totale des couches tubulaires combinées (26, 28).

7. Structure de tuyau (20) selon la revendication 5, comportant deux couches tubulaires seulement, caractérisée en ce que l'épaisseur de la première couche radiale intérieure extrême (26) atteint environ 2/3 de l'épaisseur totale des couches tubulaires combinées (26, 28).

8. Structure de tuyau (20) selon la revendication 5, caractérisée en ce que l'épaisseur totale des couches tubulaires combinées (26, 28) atteint au moins 3%, mais ne dépasse pas 10% du diamètre de l'alésage de la structure de tuyau (20).

9. Structure de tuyau (20) selon la revendication 1, caractérisée en ce que la première couche tubulaire radiale intérieure extrême (26) est constituée d'une matière présentant une usure par abrasion évaluée par une perte de matière d'environ 1,3 g, mesurée conformément à la norme ASTM D3389 en utilisant une roue H18, poids: 1 kg, 5000 révolutions, et un rebondissement d'environ 50%, mesuré conformément à la norme ASTM B1054, ainsi que les propriétés suivantes, mesurées conformément à la norme ASTM D412: une résistance à la traction d'environ 3400 livres/pouce carré (238 kg/cm$^2$), un allongement à la rupture d'environ 500%, un module, à un allongement de 300%, d'environ 680 livres/pouce carré (47,6 kg/cm$^2$) et une dureté Shore A d'environ 71, tandis que la seconde couche tubulaire extérieure radiale (28) est constituée d'une matière présentant une usure par abrasion évaluée par une perte de matière d'environ 2,1 g, mesurée conformément à la norme ASTM D3389 en utilisant une roue H18, poids: 1 kg, 5000 révolutions, et un rebondissement d'environ 70%, mesuré conformément à la norme ASTM B1054, ainsi que les propriétés suivantes, mesurées conformément à la norme ASTM D412: un résistance à la traction d'environ 4000 livres/pouce carré (280 kg/cm$^2$) un allongement d'environ 1320 livres/pouce carré (92,4 kg/cm$^2$) et une dureté Shore A d'environ 57.

10. Structure de tuyau (20) selon la revendication 9, caractérisée en ce que la première couche tubulaire radiale intérieure extrême (26) est constituée d'une matière ayant une résistance à la déchirure d'environ 750 livres/pouce carré (52,5 kg/cm$^2$), mesurée conformément à la norme ASTM D624 en utilisant une matrice en C, tandis que la seconde couche tubulaire extérieure radiale (28) est constituée d'une matière ayant une résistance à la déchirure d'environ 480 livres/pouce carré (33,6 kg/cm$^2$), également mesurée en utilisant une matrice en C.

PRIOR
ART

FIG. 1

FIG. 2

1